# EUROPEAN PATENT APPLICATION

(11) **EP 2 722 272 A1**
(43) Date of publication of application: **23.04.2014**
(21) Application number: 13188937.0
(22) Date of filing: 16.10.2013
(51) Int. Cl.: B63J 3/04, B63H 5/125, B63J 3/02, B63J 1/00, B63H 3/00, B63H 21/17, B63H 23/06, B63H 21/00

(54) **Hydrogen device for sailing boats**

(30) Priority: 17.10.2012 IT MI20121753
(71) Applicant: Agatos Green Power SRL, 28100 Novara (NO) (IT); Morisco, Federico, 20135 Milano (MI) (IT)
(72) Inventor: Morisco, Federico, I-20135 Milano (MI) (IT); Rinaldi, Leonardo, I-28100 Novara (NO) (IT)
(74) Representative: Belloni, Giancarlo

(57) **Abstract**

The invention relates to an auxiliary hydrogen system 20 for propulsion of a sailing boat 18. The system comprises: an electric navigation motor 22; an alternator 24; a propeller 26 with variable-pitch folding blades; drive means 28 for the propeller; a desalination unit 30 for intaking sea water and producing demineralized water; an electrolysis unit 32 for intaking demineralized water and producing hydrogen and oxygen in gaseous form; a main tank 34 for storing the hydrogen at low pressure; a hydrogen distribution circuit; at least one fuel cell 36 for converting the hydrogen into electric energy; and means 38 for electrically connecting the system to a permanent electricity network at the port. The propeller blades are designed to assume three different configurations: a configuration for recharging the system during sailing where the propeller blades assume a turbine configuration; a sailing regatta configuration where the propeller blades assume a folded-up configuration; and a motor navigation configuration where the propeller blades assume a propulsive configuration. Moreover the propeller drive means are designed alternatively to: connect the propeller to the alternator, thus defining the sailing recharging configuration; connect the propeller to the navigation motor, thus defining the motor navigation configuration; or keep the propeller mechanically disconnected, thus defining the sailing regatta configuration. The invention also relates to a sailing boat 18 comprising the system described above.

## Description

The present invention relates to an auxiliary hydrogen-fuelled propulsion device, in particular for sailing boats.

In the sailing sector it is known to equip the boat with an auxiliary propulsion system which allows the craft to be moved also when this cannot be achieved by means of the sails. Some situations in which typically it is not possible or advisable to use sails for propulsion are for example windless conditions or manoeuvring within a port.

For this purpose sailing boats are usually equipped with on-board engines, typically of the Diesel type. The engine obviously requires a dedicated system comprising, among the other components, a fuel storage tank and supply system, a battery and an electric motor for starting up.

With this initial configuration it is also known to provide sailing boats with an additional number of batteries designed as a whole to power the electrical user appliances which may be used when the engine is switched off and when electric energy is not produced by the alternator.

This type of solution involves a series of drawbacks. There are obviously drawbacks of an economic nature, since the fuel supply represents in general a not insignificant cost compared to the overall costs for management of the boat. Moreover, this cost, at least during the last few years, has been constantly increasing.

There are also the drawbacks as regards on-board comfort, resulting from the noise of the engine when in operation and the smell of the exhaust smoke and fumes given off by fuel on-board.

Finally the disadvantages associated with environmental pollution must be considered, this being a particularly sensitive topic which users are becoming increasingly aware of in the specific sector of sailing boats. Sailing boats are designed and perceived as being intrinsically clean and silent means of transportation and therefore the addition of an internal combustion engine is particularly inappropriate.

Replacement of the diesel engine with an electric motor comes up against the problems resulting from the need to install on-board a large number of batteries, with all the associated problems of volume and weight and in any case the problem of recharging these batteries in order to be able to power the electric motor.

It is clear that a so-called hybrid solution, in which a heat engine is used to recharge the batteries which power the electric motor used for propulsion, constitutes only a minor improvement compared to the conventional solution. Also known are floating platforms which are intended to produce electric energy which often must be transported on dry land along special lines. These platforms, which are optimized to make use of the action of the wind and/or the waves in order to produce electric energy, cannot even be defined as sailing boats since they do not allow proper navigation in the sense commonly understood in connection with conventional boats.

The object of the present invention is therefore that of overcoming at least partly the drawbacks associated with the prior art described above.

In particular, a task of the present invention is to provide a system which is applicable to any sailing boat intended for tourism, including a boat which is already available on the market and has been developed to make use of the conventional auxiliary propulsion solutions.

A task of the present invention is to provide a system which is able to be recharged during sailing and to ensure sufficient power autonomy to meet the operational requirements of an auxiliary electric motor and other on-board installations. The system may be recharged also during mooring at a port, being connected to the electricity network on the pier.

Another task of the present invention is to provide a novel design of a sailing boat for tourism use, which is provided with all the necessary amenities and is identical, in terms of form and fittings, to the conventional designs which are already commercially available.

A task of the present invention is to provide a sailing boat which produces little or no pollution and has very low management costs.

Another task of the present invention is to provide a sailing boat which is able to ensure a performance and applications entirely identical to those characteristic of recreational sailing boats of the known type.

A further task of the present invention is to provide a sailing boat which complies with the relevant European standards and may be certified in a simple manner for the same uses and applications as conventional vessels.

The object and the tasks mentioned above are achieved by a system in accordance with that claimed in Claim 1 and by a sailing boat in accordance with that claimed in Claim 10.

The characteristic features and the further advantages of the invention will emerge from the description, provided hereinbelow, of a non-limiting example of embodiment, with reference to the accompanying drawings.
Figure 1 shows a conventional sailing boat.
Figure 2.a shows a cross-sectional view of a sailing boat, comprising an auxiliary propulsion system according to the prior art in the operating configuration.

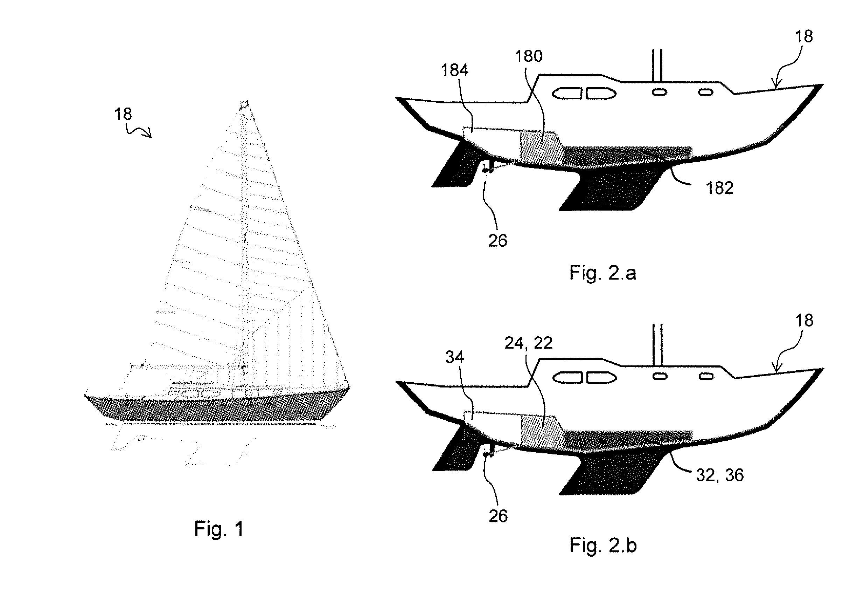

Figure 2.b shows a cross-sectional view of a sailing boat comprising an auxiliary propulsion system according to the invention in the operating configuration.

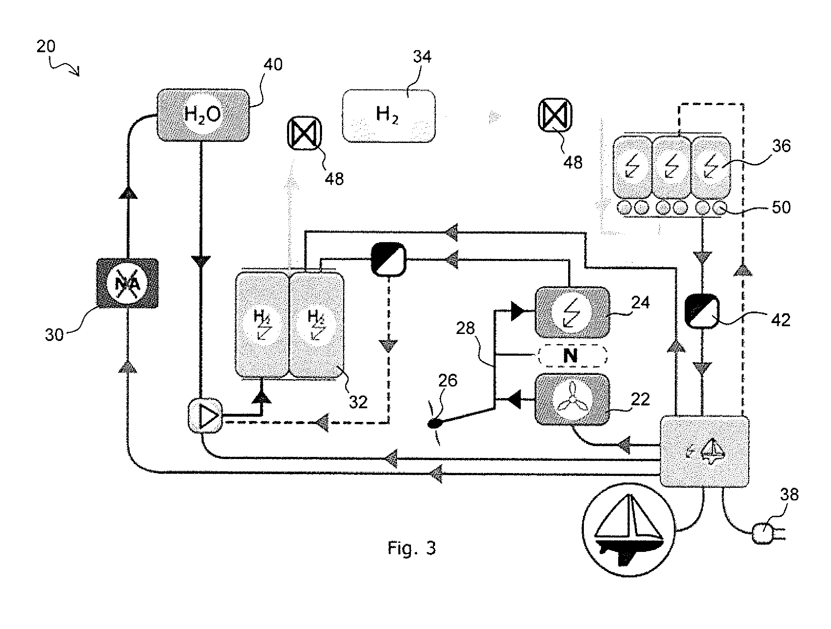

Figure 3 shows in schematic form the auxiliary propulsion system according to the invention, as shown in Figure 2.b.

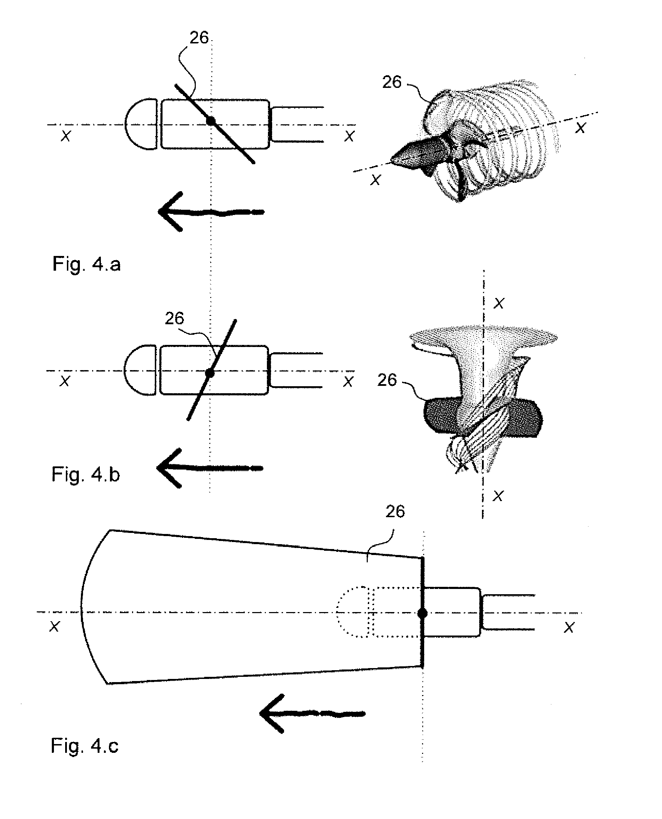

Figures 4.a, 4.b and 4.c show the multifunction propeller used in the system according to the invention, in its three possible operating configurations.

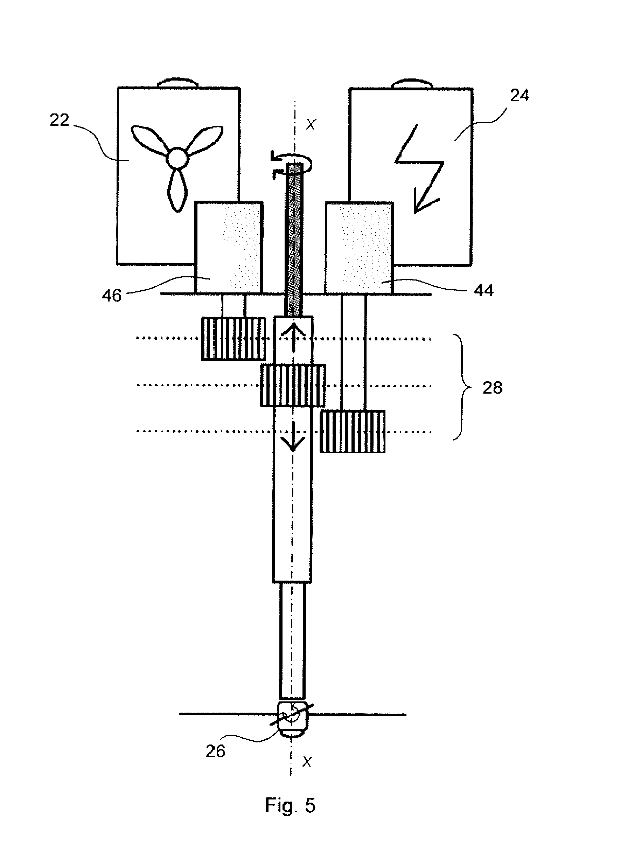

Figure 5 shows in schematic form the mechanical units intended to be connected to the propeller in its three possible configurations.

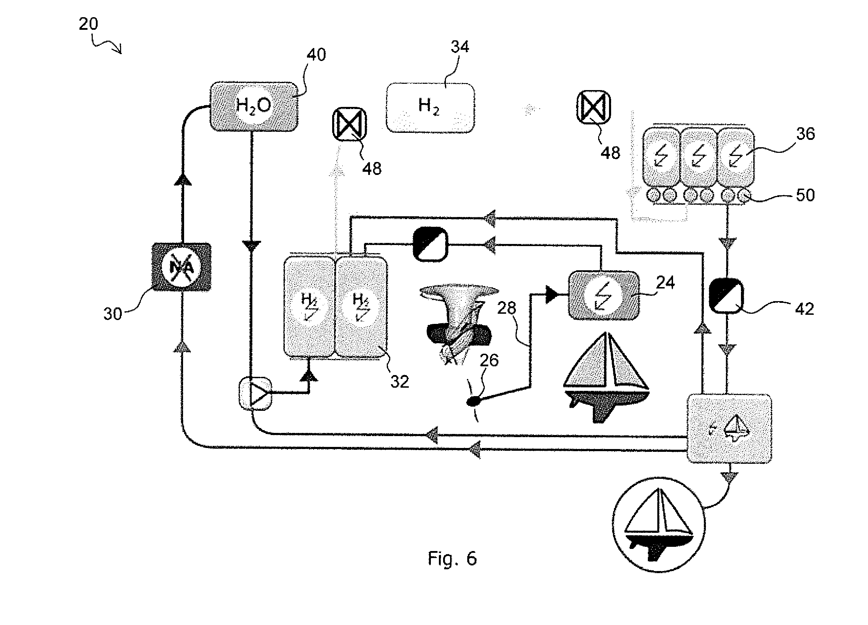

Figure 6 shows in schematic form the system according to the invention in its sailing recharging configuration.

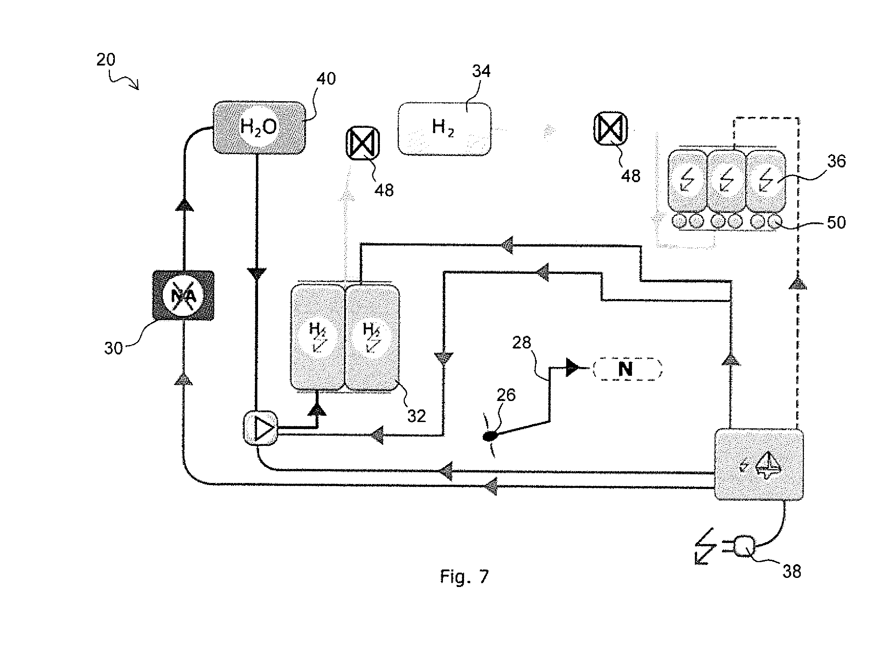

Figure 7 shows in schematic form the system according to the invention in its configuration for recharging from the network.

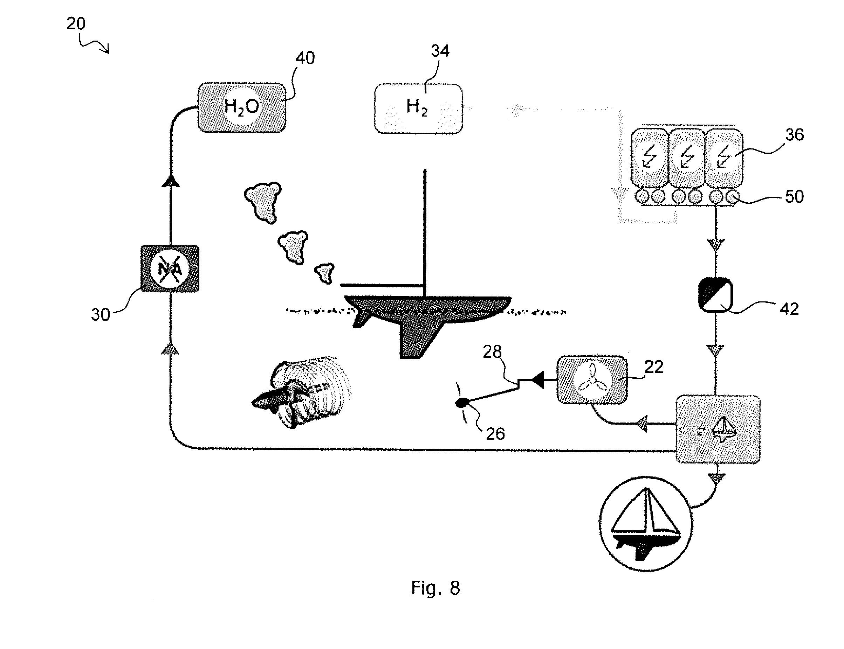

Figure 8 shows in schematic form the system according to the invention in its motor navigation configuration.

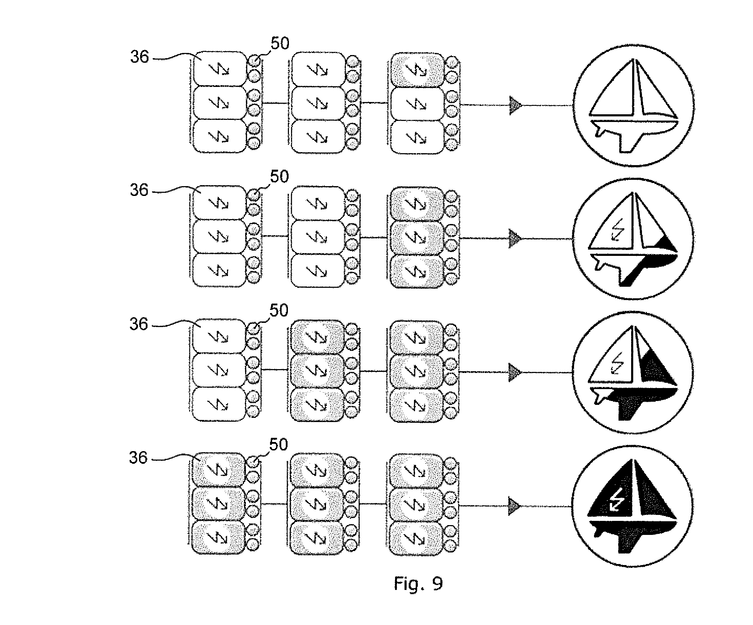

Figure 9 shows in schematic form four different solutions of the system according to the invention in response to four different energy requirements of the boat.

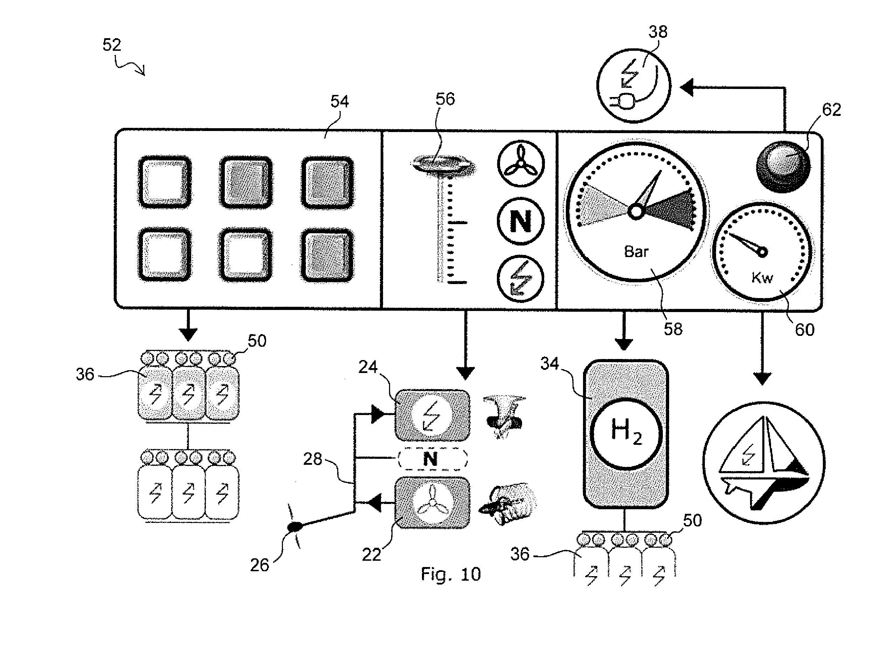

Figure 10 shows in schematic form the control panel of the system according to the invention and the components of the system to which the panel instrumentation refers.

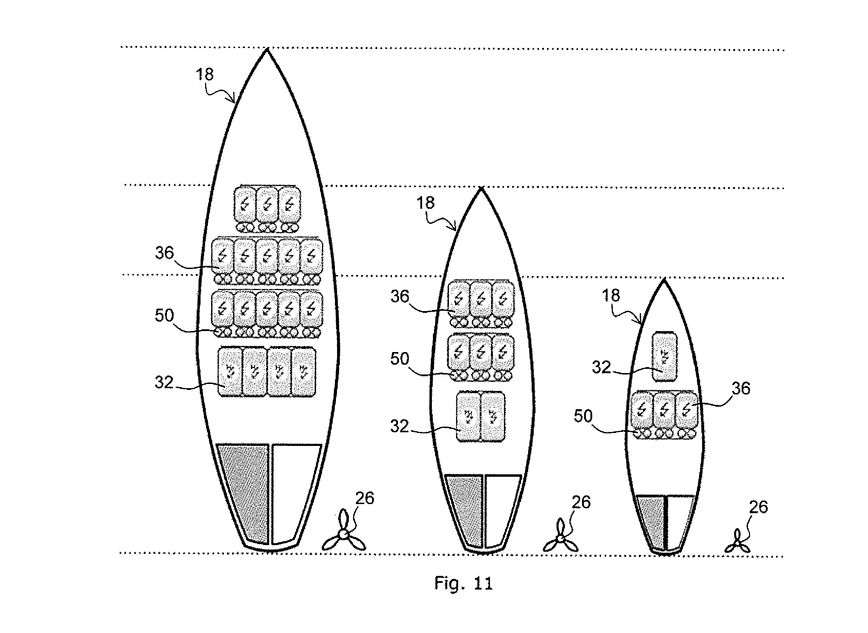

Figure 11 shows in schematic form three different embodiments of the system according to the invention intended respectively for a large-size sailing boat, medium-size sailing boat and small-size sailing boat.

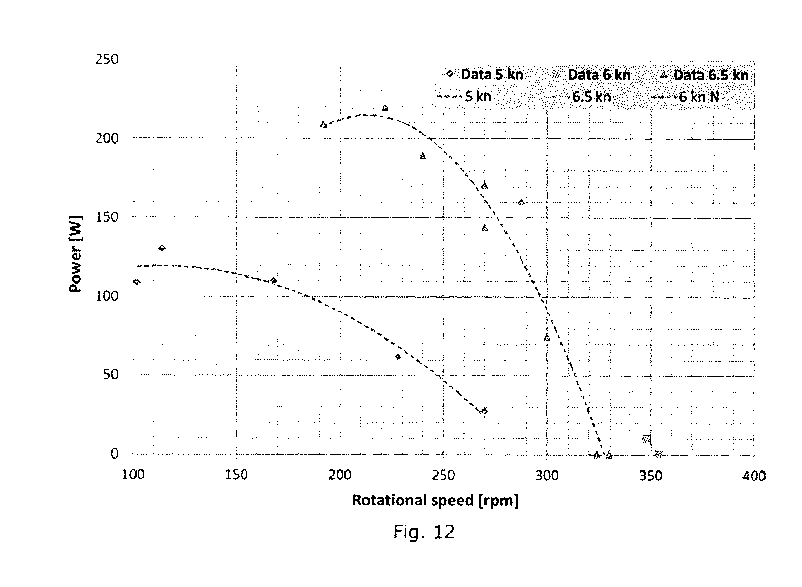

Figure 12 shows the power curve produced by a scale model of the propeller used in the system according to the invention during sailing at an average speed of 5 knots.

The auxiliary hydrogen system according to the invention is denoted overall by the reference number 20. The system is intended for propulsion of a sailing boat 18 and comprises:
- an electric navigation motor 22;
- an alternator 24;
- a propeller 26 with variable-pitch folding blades;
- drive means 28 for the propeller;
- a desalination unit 30 for intaking sea water and producing demineralized water;
- an electrolysis unit 32 for intaking demineralized water and producing hydrogen and oxygen in gaseous form;
- a main tank 34 for storing hydrogen at a low pressure;
- a hydrogen distribution circuit;
- at least one fuel cell 36 for converting the hydrogen into electric energy; and
- means 38 for electrically connecting the system to a fixed electricity network at the port.

In the system 20 according to the invention, the blades of the propeller 26 are designed to assume three different configurations:
- a configuration for recharging the system 20 during sailing where the blades of the propeller 26 assume a turbine configuration (see Figure 4.b);
- a sailing regatta configuration where the blades of the propeller 26 assume a folded-up configuration (see Figure 4.c); and
- a configuration for motor navigation where the blades of the propeller 26 assume a propulsive configuration (see Figure 4.a).

Moreover, the means 28 for driving the propeller 26, which are shown in schematic form in Figure 5, are designed alternatively to:
- connect the propeller 26 to the alternator 24, thus defining the sailing recharging configuration (see Figure 6);
- connect the propeller 26 to the navigation motor 22, thus defining the motor navigation configuration (see Figure 8); or
- keep the propeller 26 mechanically disconnected, thus defining the sailing regatta configuration.

The invention also relates to a sailing boat 18 comprising a system 20 in accordance with that described above.

More particularly, therefore, in the sailing recharging configuration, the mechanical energy associated with the relative movement of the water and the hull is used by the propeller 26 to produce electric energy by means of the alternator 24. In this configuration the pitch of the propeller 26 is optimized so that it operates as a turbine, preferably as a Kaplan turbine.

In the motor navigation configuration, the electric energy provided by the system 20 is used to perform rotation of the propeller 26 by means of the navigation motor 22. In this configuration the pitch of the propeller is optimized in order to cause operation of the latter in a conventional manner. Preferably in this configuration the navigation motor 22 receives energy exclusively from at least one fuel cell 36 (see Figure 8).

In the sailing regatta configuration, finally, the propeller 26 has its blades folded-up towards the X axis of rotation (see Figure 4.c) and is mechanically disconnected from any other component so as to limit the hydrodynamic resistance thereof as far as possible.

The multifunction propeller 26 of the system 20 according to the invention advantageously comprises controls - preferably mechanical ones - which may be used to vary the pitch of the propeller and to determine opening thereof during use. Variable-pitch propellers are well known where the pitch may be adjusted by means of a suitable control, while remaining conveniently on-board the boat. Equally well known are propellers with folding blades where the blades may be folded up towards the axis of rotation when it is required to reduce the hydrodynamic resistance, for example during sailing. In this type of known propeller the thrust generated by the water flow is used to fold up automatically the propeller blades when the propeller is not being driven by the motor. On the other hand, when the propeller is being driven by the motor, the centrifugal force opens the blades and keeps them in the open configuration suitable for propulsion.

Finally folding propellers are known where the pitch may be manually varied by directly adjusting the propeller blades. In other words, in order to vary the pitch of this known type of propellers, it is necessary to stop the boat, ensure that the propeller is at a standstill, dive under water in order to reach the propeller and manually direct the blades. Alternatively it is obviously possible to vary the pitch of the propeller after grounding the boat, for example in a dry dock or on a slipway.

As already mentioned above, the multifunction propeller 26 according to the invention is both of the folding and variable-pitch type. Unlike in the prior art, in the system 20 according to the invention, opening of the blades is performed by means of a proper control, preferably of the mechanical type. In other words it is possible to move the blades of the propeller 26 from the position folded-up towards the axis of rotation X (configuration where there is minimum resistance, typically used for sailing regattas) into the radially open position (typically the sailing recharging configuration). In this configuration, in fact, a normal folding propeller would be closed up by the thrust of the water flow.

In a manner known per se, by means of another control it is possible to vary the pitch of the propeller 26, for example so as to pass from the sailing recharging configuration, where the propeller acts as a turbine, to the motor navigation configuration, where the propeller performs its propelling function. This operation of varying the pitch, as well as the operation of opening the propeller, may be performed while remaining conveniently on-board the boat, by simply operating the appropriate controls.

The system 20 according to the invention incorporates an electrolysis unit 32 for the production of gaseous hydrogen, a special main tank 34 for low pressure storage of said hydrogen and at least one fuel cell 36 for combustion. This system is therefore able to provide in a continuous and renewable manner the electric energy needed for operation of the navigation motor 22 and all the other devices for performing navigation and ensuring the comfort of the crew manning the boat 18.

The alternator 24 is intended to produce electric energy for operation of the electrolysis unit 32.

The electric motor 22 is intended for motorized navigation of the boat 18, in the event of manoeuvring in ports, navigation in dead calm conditions, as an aid for sailing navigation.

The electric demineralization unit 30 is intended to perform desalination of the sea water which supplies the electrolysis unit 32. The electrolysis unit 32 is a device, known per se, which uses the electric energy to produce gaseous hydrogen from the demineralized water.

A main tank 34 is used for storage of the gaseous hydrogen produced by the electrolysis unit 32 using the demineralized water, the hydrogen being necessary for supplying the fuel cell 36.

A cistern 40 is preferably provided for storing the demineralized water necessary for supplying the electrolysis unit 32.

The fuel cell 36 is a device known per se able to convert, for chemical combustion, the gaseous hydrogen into electric energy. The number of fuel cells 36 present may be variable depending on the dimensions and the power consumption of the boat 18 (see Figure 11).

Preferably the system 20 also comprises an inverter 42 connected to the electrical network of the boat 18. The inverter 42 is an electric device which, in a manner known per se, is able to convert the direct electric current produced by the fuel cells 36 into alternating electric current at the desired voltage and frequency, for example those suitable for powering the electrical user appliances on the boat 18 and in particular for powering the motor 22 and the electrolysis unit 32.

The drive means 28 for the propeller 26 preferably comprise two gear boxes designed to optimize the rotation of the shaft connected to the propeller of the boat in the different operating configurations.

In particular, a first gear box 44 is designed to optimize the performance of the propeller 26 in the sailing recharging configuration, and therefore to impart to the shaft the optimum rotational speed and torque for operation of the alternator 24 to which it is connected. As will be clear to the person skilled in the art, in this configuration the power flows in mechanical form from the propeller 26 to the alternator 24 and then in electrical form to the system 20.

A second gear box 46 is designed to optimize the performance of the propeller 26 in the motor navigation configuration, and therefore to impart to the shaft the optimum rotational speed and torque for operation of the electric motor 22. As will be clear to the person skilled in the art, in this configuration the power flows in the form of electric energy from the system 20 to the motor 22 and then in the form of mechanical energy to the propeller 26.

As already mentioned, the hub for rotation of the propeller 26 comprises internally also the devices designed to vary the pitch of the propeller blades and to fold them up during sailing in order to improve the sailing performance of the boat during regattas.

The system 20 according to the invention also comprises a circuit for distributing and storing the low-pressure hydrogen, intended to convey the gaseous hydrogen produced by the action of the electrolysis unit 32 to the main tank 34 and then from the main tank 34 to the at least one fuel cell 36 intended to produce electric energy. The hydrogen distribution circuit preferably comprises electrovalves 48 for controlling the flow of the hydrogen.

Preferably the system 20 according to the invention also comprises a water distribution circuit. The circuit comprises a standard sea water suction pump which is used to supply the desalination unit 30. The water circuit is also able to convey the demineralized water from the desalination unit 30 to the storage cistern 40 and then from the storage cistern 40 to the electrolysis unit 32.

The electrolysis unit 32 preferably has an auxiliary electric circuit able to ensure operation thereof also when stopping at ports via the means 38 for electrically connecting the system to the electricity network of the port (see Figure 7). Preferably the fuel cells 36 are equipped in turn with dedicated electrical circuits: a circuit for connecting at least one cell 36 to an external electrical network which provides the energy necessary for starting the cell; a circuit which connects the cells 36 which are already activated to the cells which are still switched off, so as to be able to provide the latter with the electric energy necessary for start up; a circuit which conveys the electric energy produced by the fuel cells 36 to the devices present on the boat 18.

Preferably the system 20 according to the invention also comprises a circuit for disposal of the water vapour produced by the activity of the fuel cells 36. For example, the water vapour disposal circuit may comprise ducts designed to convey the vapour to the discharge pipe which is normally provided in the hull for disposal of the exhaust gases from the internal combustion engine of the sailing boat.

With the system 20 according to the invention it is therefore possible to use the gaseous hydrogen, obtained by means of hydrolysis of the demineralized sea water, in order to store a part of the energy obtained from the wind during navigation using the sails.

The kinetic energy produced by the flow of the water around the hull, which forms the basis for operation of the system 20 according to the invention, is preferably exploited by using the propeller 26. The propeller, which is of the variable-pitch type, is able to assume the optimum configuration for best exploiting the movement of the water around the hull of the boat during sailing. In this condition the propeller 26 therefore uses a configuration of the blades which is comparable to that of a turbine, preferably a Kaplan turbine. This is in fact an axial flow turbine which is used in particular during the production of hydroelectric power.

The mechanical energy produced by the propeller 26 is suitably modulated with regard to the torque and speed values via the first gear box 44 and then transmitted to the alternator 24 intended to power the electrolysis unit 32 of the system 20.

Furthermore, owing to the possibility of mechanically varying the pitch of the propeller 26, it is possible to optimize the efficiency of the propeller itself also during motor navigation, so that it has the configuration suitable for making best use of the characteristics of the motor 22 in terms of speed, torque and power. Finally, owing to the possibility of being able to fold up completely the blades of the propeller 26 it is possible to improve sailing, drastically reducing the hydrodynamic resistance due to the presence of the propeller itself.

The hydrogen is produced by one or more electrolysis units 32 which may be powered by the electricity produced during sailing by the alternator 24 mechanically connected to the propeller 26 of the boat 18. Alternatively, when the boat is moored at a port, the electrolysis units 32 may be powered, via the means 38, directly by the electricity network of the pier or the shipyard where the boat 18 has been taken.

The demineralized water necessary for the electrolysis process performed by the electrolysis units 32 is supplied by one or more desalination units 30. Once demineralized, the water is stored in a cistern 40 which also supplies preferably all the other on-board devices which require demineralized water.

The hydrogen produced by the electrolysis unit 32 is stored in a main storage tank 34 at low pressure. The expression "low pressure" is understood as meaning here a pressure in the range of 20-40 bar, preferably 25-35 bar, and even more preferably about 30 bar. Preferably the main tank 34 is in turn connected to peripheral tanks 50 arranged in the vicinity of the fuel cells 36 and connected thereto. The fuel cells 36 supplied with the hydrogen produce the electric energy necessary for navigation and for the electrical and electromechanical devices on the boat 18.

Each peripheral tank 50 is able to supply the fuel cell 36 connected to it for 8 hours. In accordance with a preferred embodiment of the system 20 according to the invention, when the hydrogen contained in one of the peripheral tanks 50 reaches a predetermined level, for example half of the capacity of the peripheral tank 50, more hydrogen is automatically drawn from the main low-pressure tank 34. Similarly, when the hydrogen contained in the main tank 34 reaches a predetermined level, for example half of the capacity, it is possible to activate the hydrogen replenishing system by activating the electrolysis units 32. It is clear, however, to the person skilled in the art that hydrogen replenishing using the electrolysis units 32 may occur at any time, provided that there is a minimum amount of free space inside the main tank 34 and/or in the peripheral tanks 50.

The on-board electric energy is produced directly by at least one fuel cell 36. In the case where the system comprises more than one fuel cell 36, the amount of electric energy produced may be modulated, depending on the requirements at any one time, by choosing the number of fuel cells 36 activated at the same time. See in this connection the schematic illustration shown in Figure 9. The electricity produced is preferably converted by the inverter 42 and conveyed to the on-board electrical network in order to be distributed to all the user appliances on the boat 18.

In order to control the amount of stored hydrogen used, the system 20 envisages capillary management of the fuel cells 36 present. This mode of management allows switching-on or switching-off of the single fuel cells 36 so as to produce only the electric energy effectively required for the system at any one time.

Preferably the system 20 always keeps, also in stand-by situations, at least one fuel cell 36 in operation, so as to allow the system to become operative again at any moment.

The devices for controlling the single fuel cells 36 and the other components for managing the hydrogen are preferably inserted in a dedicated control panel 52, shown schematically in Figure 10. The control panel 52 may comprise for example:
- controls 54 for selectively switching on or off the single fuel cells 36;
- a selector 56, for example of the electromechanical type, for setting the different configurations described above (sailing recharging configuration, sailing regatta configuration or motor navigation).
- a pressure gauge 58 for controlling the pressure and therefore the amount of hydrogen stored in the main tank 34;
- a counter 60 for measuring the actual electric power consumption of the boat 18; and
- a control 62 for activating or deactivating the mode of recharging from the fixed network.

Owing to the smaller overall weight of the components and devices which make up the system 20 according to the invention, the sailing boat 18 equipped with it is substantially lighter than a same boat equipped with a conventional system using an auxiliary Diesel engine or even electric motor. Owing to the lightness of the boat 18 it is possible to obtain an improved performance during sailing regattas.

Furthermore with the system 20 and the sailing boat 18 according to the invention it is possible - differently from conventional boats - to eliminate completely the polluting emissions, with the emission only of the water vapour produced by the fuel cells 36.

Moreover, with the system 20 and the boat 18 according to the invention it is possible to achieve a drastic reduction in the management costs since it is no longer required to purchase fossil fuel, but only electric energy from the fixed electricity network at the mooring.

The system 20 and the boat 18 according to the invention combine the advantage of performing recharging at zero cost by means of sailing, with the convenience of recharging at a low cost while the boat is moored at a port by connecting up the power supply plug to the pier. As a result it is also possible to eliminate completely the downtime and the obligatory stoppages which are normally needed for refuelling.

Owing to the possibility of producing energy by making use of the movement of the boat during sailing, a high degree of autonomy may be achieved, as has been demonstrated by the tests carried out by the Applicants in cooperation with the Polytechnic University of Milan. For example, it has been established that, in the case of a boat of 10 metres length, the system is able to output 6 Kw/h for 32 consecutive hours without recharging at ports.

By storing the energy in the form of low-pressure hydrogen it is possible to dispense completely with the use of batteries 182 on-board, thereby eliminating at the origin the problems associated with periodic replacement and disposal of the batteries. It should be noted in fact that, in the motor navigation condition where the greatest energy flow is required, the navigation motor 22 may be powered by the fuel cells 36 only, without the need to use any battery 182. Moreover, this method of storing energy ensures that the system 20 has compact dimensions and at the same time an autonomy which is substantially greater than that which can be achieved with any type of commercially available battery.

The system 20 according to the invention may be easily installed in ready-existing sailing boats 18, replacing the conventional systems in them, both during the design stage and during the post-sales reconversion stage. In particular, the components which make up the system 20 according to the invention may be installed in the spaces on the boat 18 which are normally intended to house the internal-combustion engine 180, the batteries 182 and the fuel tanks 184, without modifying the form and dimensions of the hull and its compartments. Compare Figures 2.a and 2.b in this connection. This results in significant economic advantages during conversion of the industrial production lines both for a prototype and for a series of boats according to the invention.

It should be noted moreover that the system 20 according to the invention may be easily modified in terms of its capacity so that it can be easily designed with dimensions suitable for installation on different-size boats 18 (see Figure 11). The sailing boat 18 equipped with the system 20 according to the invention is therefore entirely similar, in terms of appearance and functions, to conventional sailing boats, this being a very important consideration. The boat 18 according to the invention also has performance features and applications which are identical to those characteristic of recreational sailing boats of the conventional type.

Moreover, since most of the components of the system 20 according to the invention may be found singly on the market, albeit intended for other uses, the certifications and safety features of the system 20 may be easily adapted to comply with the existing regulations, as applicable to conventional vessels.

As the person skilled in the art may easily understand, the propeller 26 with the variable-pitch and folding blades (necessary in the system 20 according to the invention in order to be able to switch between the different configurations) allows optimization of the boat's performance, as in the case of top-of-the-range sailing boats of the conventional type.

It should be noted that normally the amount of electric energy obtained during sailing is limited and is not sufficient for complete recharging of the system in a reasonable amount of time. It is thus necessary to combine recharging obtained in this way with recharging obtained using the fixed electricity network during stoppages at ports. In this sense the sailing boat 18 according to the invention is completely different from the other vessels which exploit the sailing movement for the production of electric energy. The latter vessels, in fact, since they must achieve energy production levels greater than their total requirement, are vessels which are totally unsuitable for normal recreational tourism sailing and are therefore to be regarded as simple floating platforms for the production of off-shore energy.

Obviously, a person skilled in the art, in order to meet any specific requirement which might arise, may apply further modifications and variations to the system and boat according to the invention, all of which however are contained within the scope of protection of the invention as defined by the following claims.

## Claims

1. Auxiliary hydrogen system (20) for propulsion of a sailing boat (18), comprising:
- an electric navigation motor (22);
- an alternator (24);
- a propeller (26) with variable-pitch folding blades;
- drive means (28) for the propeller;
- a desalination unit (30) for intaking sea water and producing demineralized water;
- an electrolysis unit (32) for intaking demineralized water and producing hydrogen and oxygen in gaseous form;
- a main tank (34) for storing the hydrogen at low pressure;
- a hydrogen distribution circuit;
- at least one fuel cell (36) for converting the hydrogen into electric energy; and
- means (38) for electrically connecting the system to a fixed electricity network at the port;
wherein the blades of the propeller (26) are designed to assume three different configurations:
- a configuration for recharging the system during sailing where the blades of the propeller (26) assume a turbine configuration;
- a sailing regatta configuration where the blades of the propeller (26) assume a folded-up configuration; and
- a configuration for motor navigation where the blades of the propeller (26) assume a propulsive configuration;
and wherein the drive means (28) for the propeller (26) are designed to alternatively:
- connect the propeller (26) to the alternator (24), thus defining the sailing recharging configuration;
- connect the propeller (26) to the navigation motor (22), thus defining the motor navigation configuration; or
- keep the propeller (26) mechanically disconnected, thus defining the sailing regatta configuration.

2. System (20) according to Claim 1, further comprising an inverter (42) for converting the direct electric current produced by the fuel cell (36) into alternating electric current at the desired voltage and frequency.

3. System (20) according to Claim 1 or 2, wherein the drive means (28) for the propeller (26) comprise a first gear box (44) designed to optimize the performance of the propeller in the sailing recharging configuration, imparting to the shaft the optimum rotational speed and torque for operation of the alternator (24).

4. System (20) according to any one of the preceding claims, wherein the drive means (28) for the propeller (26) comprise a second gear box (46) for optimizing the performance of the propeller during the motor navigation configuration, imparting to the shaft the optimum rotational speed and torque for operation of the electric motor (22).

5. System (20) according to any one of the preceding claims, wherein the hydrogen distribution circuit comprises electrovalves (48) for controlling the hydrogen flow.

6. System (20) according to any one of the preceding claims, further comprising a water distribution circuit comprising a suction pump for the sea water, means for conveying the sea water to the desalination unit (30), means for conveying the demineralized water from the desalination unit (30) to a storage cistern (40), and means for conveying the demineralized water from the storage cistern (40) to the electrolysis unit (32).

7. System (20) according to any one of the preceding claims, wherein the main tank (34) is designed to store the hydrogen at a low pressure in the range of 20-40 bar, preferably 25-35 bar, even more preferably about 30 bar.

8. System (20) according to any one of the preceding claims, wherein, in the motor navigation configuration, the motor (22) is powered exclusively by at least one fuel cell (36).

9. System (20) according to any one of the preceding claims, further comprising controls by means of which, during use, it is possible to vary the pitch of the propeller (26) and determine opening of the blades of the propeller (26).

10. Sailing boat (18) comprising an auxiliary system (20) according to any one of the preceding claims.
